# EUROPEAN PATENT SPECIFICATION

(11) **EP 2 562 027 B1**
(45) Date of publication and mention of the grant of the patent: **07.03.2018**
(21) Application number: 12181181.4
(22) Date of filing: 21.08.2012
(51) Int. Cl.: B62M 6/40, B62M 6/90, B60L 11/18, B60L 11/00, B62J 99/00, B62M 6/70, B62M 6/45

(54) **Battery-assisted bicycle**
Batterieunterstütztes Fahrrad
Vélo assisté par une batterie

(30) Priority: 22.08.2011 JP 2011180934
(43) Date of publication of application: 27.02.2013
(73) Proprietor: Yamaha Hatsudoki Kabushiki Kaisha, Shizuoka-ken Shizuoka 438-8501 (JP)
(72) Inventor: Nozawa, Shinjiro, Iwata-shi, Shizuoka 438-8501 (JP); Kishita, Hirokatsu, Iwata-shi, Shizuoka 438-8501 (JP); Kamiya, Satoshi, Iwata-shi, Shizuoka 438-8501 (JP)
(74) Representative: Grünecker Patent- und Rechtsanwälte PartG mbB

(56) References cited:
- EP-A1- 2 221 208
- EP-A2- 1 552 976
- WO-A2-2011/073765
- DE-A1-102010 007 851
- JP-A- H1 042 537
- JP-A- H10 304 502
- JP-A- 2001 114 153
- JP-A- 2007 230 411
- BikeArea Tirol: "Haibike eQ Xduro 2011 - Komponenten", , 17 March 2011 (2011-03-17), XP054975872, Retrieved from the Internet: URL:https://www.youtube.com/watch?v=i3fhNb djSlw [retrieved on 2015-05-21]

## Description

The present invention relates to a battery-assisted bicycle that assists the pedal effort of a rider with driving force from an electric motor according to the preamble of claim 1 and the method claim 11
Battery-assisted bicycles on which the remaining assistable travel distance based on the remaining battery level is displayed have been known. A battery assisted bicycle according to the preamble is known from "BikeArea Tirol: Haibike eQ Xduro 2011-Komponenten, 17 th March 2011, XP054975872.

As disclosed in, for example, JP 10-304502A, such a battery-assisted bicycle calculates the remaining assistable travel distance based on the remaining battery level, speed information of the battery-assisted bicycle, and lapse time information.

In detail, the battery-assisted bicycle disclosed in JP 10-304502A calculates the amount of battery electricity discharged per unit travel distance until a predetermined time based on the remaining battery level, speed information of the battery-assisted bicycle, and lapse time information. Then, the battery-assisted bicycle disclosed in JP 10-304502A obtains the remaining assistable travel distance by dividing the remaining battery level by the calculated amount of battery electricity discharged per unit travel distance.

The battery-assisted bicycle disclosed in JP 10-304502A needs to travel a specific distance to calculate the amount of battery electricity discharged per unit travel distance. Accordingly, the battery-assisted bicycle disclosed in JP 10-304502A has a time lag until the result of calculation of the remaining assistable travel distance is displayed.

With such a time lag until the assistable travel distance is displayed, it may take a long time until a change of remaining assistable travel distance is noticed if the proportion of electric motor assistance is changed. For example, if the proportion of assistance to pedal effort is increased, the remaining assistable travel distance shortens. Accordingly, if it takes a long time until a change of remaining assistable distance is noticed, there is a possibility that assisted traveling to the destination is not achievable.

### SUMMERY OF THE INVENTION

Accordingly, an object of the present invention is to provide a battery-assisted bicycle according to claim 1 and a method according to claim 11.

The battery-assisted bicycle according to one embodiment of the present invention is a battery-assisted bicycle that assists the pedal effort of a rider with driving force from an electric motor. The battery-assisted bicycle includes a motor control part configured to control driving of the electric motor in accordance with the pedal effort, a battery configured to supply electricity to the electric motor, and a battery control part configured to determine the remaining level of the battery. Also, the battery-assisted bicycle includes an assistable distance calculating part configured to calculate a remaining assistable travel distance based on the remaining level of the battery determined by the battery control part, and a display configured to indicate the assistable travel distance calculated by the assistable distance calculating part.

The motor control part is configured so as to be capable of changing the proportion of the electric motor assistance to the pedal effort. The assistable distance calculating part is configured to calculate the assistable travel distance in accordance with the change of the proportion of assistance in the motor control part.

The battery-assisted bicycle according to another embodiment of the present invention is capable of promptly displaying, when the proportion of assistance is changed, the assistable travel distance determined in accordance with the post-change proportion of assistance.

The present invention further includes a method for displaying the assistable travel distance of a battery-assisted bicycle that assists a pedal effort of a rider with driving force from an electric motor, which is supplied with electricity from a battery and whose driving is controlled by a motor control part in accordance with the pedal effort. This method comprises the steps of determining a remaining level of the battery, calculating a remaining assistable distance based on the remaining level of the battery, calculating the assistable travel distance in accordance with a change of a proportion of assistance of the electric motor to the pedal effort, and displaying the calculated assistable travel distance, wherein the step of calculating the assistable travel distance based on the remaining level of the battery further includes the step of calculating the assistable travel distance based on the electricity consumption rate that is a travel distance per unit capacity of the battery and is determined in accordance with the proportion of assistance.

### BRIEF DESCRIPTION OF THE DRAWINGS

FIG. 1 is a right side view showing a schematic configuration of a battery-assisted bicycle according to Embodiment 1 of the present invention.
FIG. 2 is a diagram showing a schematic configuration of a driving unit and a driven sprocket.
FIG. 3 is a cross-sectional view taken along the line III-III in FIG. 2.
FIG. 4 is a front view of a display device.
FIG. 5 is a diagram showing the display device attached to a handlebar.
FIG. 6 is a block diagram showing a schematic configuration of a control part, a battery control part, and a display device control part in Embodiment 1.
FIG. 7 is a flowchart showing a method for calculating an assistable travel distance in Embodiment 1.
FIG. 8 is a flowchart showing display control for an assistable travel distance in a display device control part.
FIG. 9 is a block diagram showing a schematic configuration of an assistable distance calculating part in Embodiment 2.
FIG. 10 is a flowchart showing a method for calculating an assistable travel distance in Embodiment 2.

### DETAILED DESCRIPTION OF THE INVENTION

Embodiments of the present invention will now be described below with reference to the drawings. Note that, regarding the dimensions of the constituent members in the drawings, the dimensions of the actual constituent members, the proportions of the dimensions of the constituent members, and the like are not shown faithfully.

In the following description, the terms "front", "rear", "left", and "right" refer to the front, rear, left, and right, respectively, of a battery-assisted bicycle 1 as viewed from a rider sitting on a seat 24 while holding a handlebar 23.

### Embodiment 1

### (Overall configuration of battery-assisted bicycle)

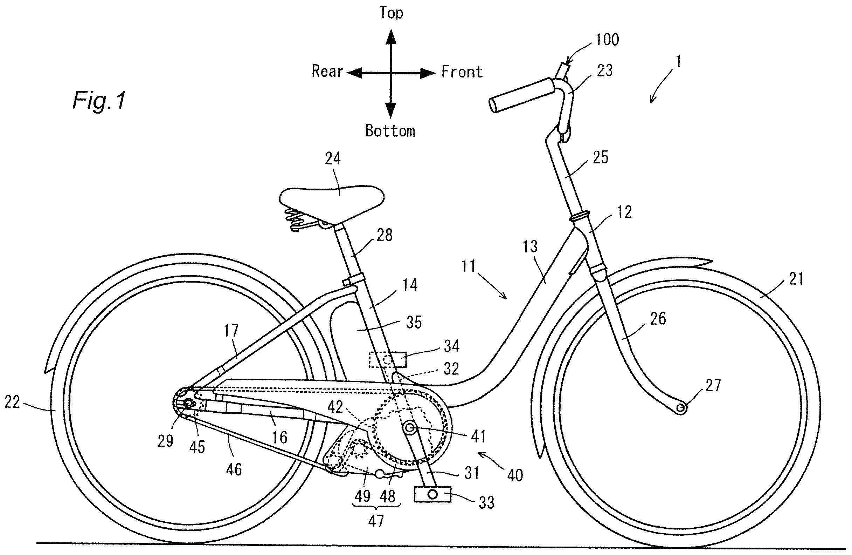

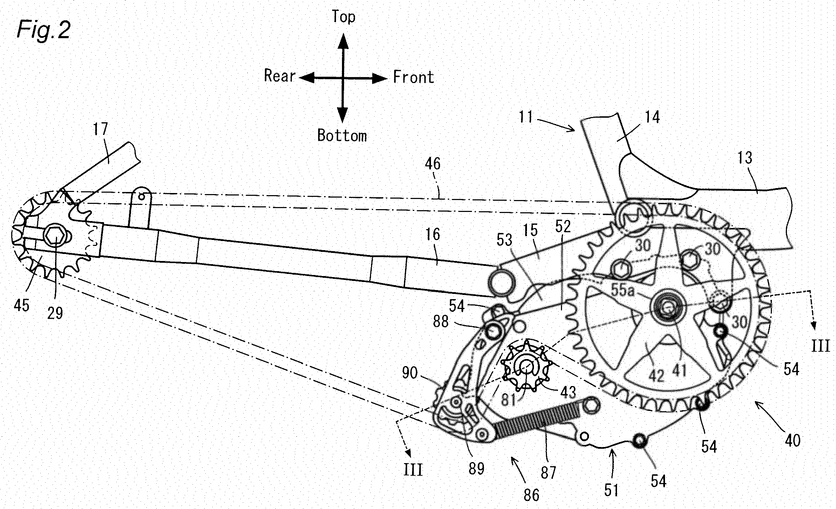

FIG. 1 shows a schematic configuration of the battery-assisted bicycle 1 according to Embodiment 1. FIG. 2 shows a schematic configuration of a driving unit 40 and a driven sprocket 45 of the battery-assisted bicycle 1. As described below, the battery-assisted bicycle 1 assists the pedal effort obtained when a rider works pedals 33, 34 with driving force that is output from an electric motor 61. That is, the battery-assisted bicycle 1 has, in addition to the configuration of an ordinary bicycle, a driving mechanism to assist the pedal effort.

As shown in FIG. 1, the battery-assisted bicycle 1 has a frame 11 extending in the fore-aft direction. Also, the battery-assisted bicycle 1 has a front wheel 21, a rear wheel 22, the handlebar 23, the seat 24, and the driving unit 40.

The frame 11 has a head tube 12, a down tube 13, a seat tube 14, a bracket 15 (see FIG. 2), a pair of chain stays 16, and a pair of seat stays 17. As shown in FIG. 1, the head tube 12 is disposed in the front part of the battery-assisted bicycle 1. The head tube 12 is connected to the front side of the down tube 13 that extends rearward. The seat tube 14 is connected to the rear side of the down tube 13, and extends upward as well as obliquely rearward from the rear end of the down tube 13.

As shown in FIG. 2, the bracket 15 is attached to the rear side of the down tube 13. To the rear side of the bracket 15 are connected the pair of chain stays 16 such that the rear wheel 22 is sandwiched from right and left. As shown in FIG. 1, regarding the pair of seat stays 17, one end of a seat stay is connected to one chain stay 16. Also, regarding the pair of seat stays 17, the other end of each seat stay is connected to the seat tube 14.

A handlebar stem 25 is rotatably inserted into the head tube 12. The handlebar 23 is fixed to the upper end of the handlebar stem 25. A front fork 26 is fixed to the lower end of the handlebar stem 25. The front wheel 21 is rotatably supported by an axle 27 at the lower end of the front fork 26.

A sheet post 28 is inserted into the cylindrical seat tube 14. A seat 24 is provided at the upper end of the seat post 28.

As shown in FIGS. 1 and 2, at the rear ends of the pair of chain stays 16, the rear wheel 22 is rotatably supported by an axle 29. The driven sprocket 45 is provided coaxially with the axle 29 on the right side of the rear wheel 22. The driven sprocket wheel 45 is connected to the rear wheel 22 via a one-way clutch (not shown).

As shown in FIG. 2, the driving unit 40 is fixed to the bracket 15 by a plurality of fastening metal fittings 30. The configuration of the driving unit 40 will be described below. As shown in FIGS. 1 and 2, an endless chain 46 is placed around a driving sprocket 42, which will be described below, of the driving unit 40 and the driven sprocket 45 provided on the rear wheel 22. A chain cover 47 is attached to the frame 11 so as to cover the driving unit 40 and the chain 46 (see FIG. 1). The chain cover 47 has a main cover 48 and a subcover 49. The main cover 48 covers the right side of the driving sprocket 42 and extends in the fore-aft direction. The subcover 49 covers the right side of the rear part of the driving unit 40.

As shown in FIG. 1, crank arms 31, 32 are attached to the respective ends of a crankshaft 41 of the driving unit 40, which will be described below. The pedals 33, 34 are attached to the end of the crank arm 31 and the end of the crank arm 32, respectively.

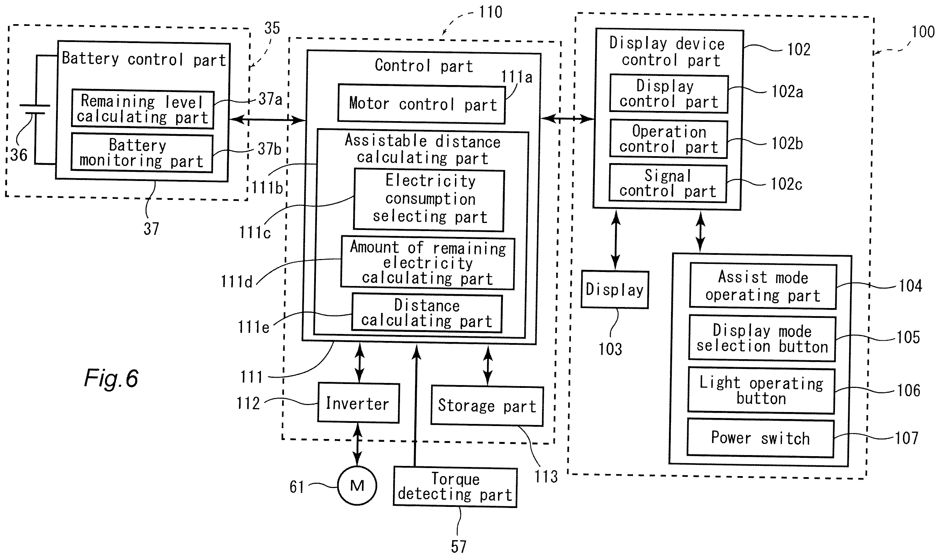

As shown in FIG. 1, a battery unit 35 to supply electricity to the electric motor 61 of the driving unit 40, which will be described below, is disposed behind the seat tube 14. The battery unit 35 has a battery 36 and a battery control part 37 (see FIG. 6). The battery 36 is a rechargeable battery capable of charge and discharge. The battery control part 37 controls the charge and discharge of the battery 36, and also monitors the output current, the remaining level, and the like of the battery 36. The configuration of the battery control part 37 will be described below.

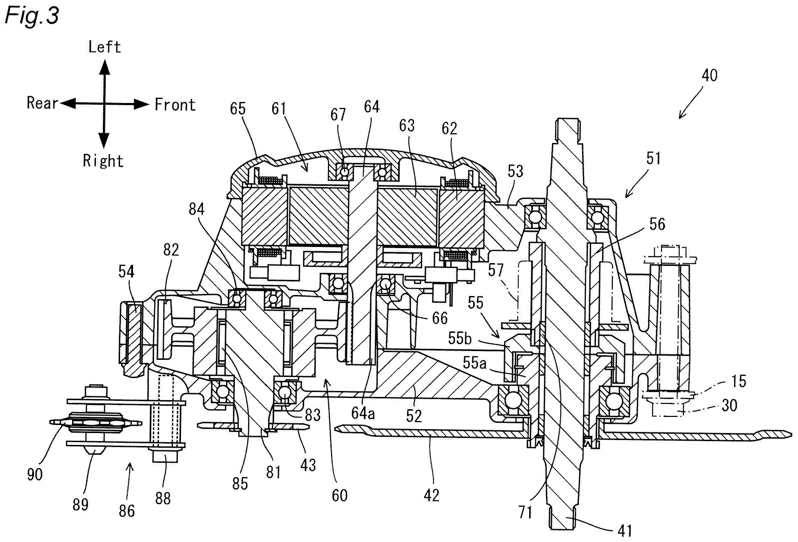

FIG. 3 is a cross-sectional view showing a schematic configuration of the driving unit 40. FIG. 3 is a cross-sectional view taken along the line III-III in FIG. 2.

As shown in FIG. 3, the driving unit 40 has a body part 51, the crankshaft 41, the driving sprocket 42, a driving force generating part 60, a supplementary sprocket 43, and a chain tensioner 86.

The body part 51 has a first housing part 52 and a second housing part 53 that are assembled to each other from right and left. The first housing part 52 and the second housing part 53 are fixed to each other by a plurality of fastening metal fittings 54 (see FIGS. 2 and 3). The body part 51 is attached to the bracket 15 by the fastening metal fittings 30.

As shown in FIG. 3, the crankshaft 41 penetrates the body part 51 in the right-left direction, and is rotatably supported by the front part of the body part 51. The crankshaft 41 is rotatably supported via a plurality of bearings by the first housing part 52 and the second housing part 53. On one side of the crankshaft 41, a substantially cylindrical inner member 55a that rotates integrally with the crankshaft 41 is provided. The crank arms 31, 32 are connected to the respective ends of the crankshaft 41 as described above, and therefore when a rider works the pedals 33, 34, the crankshaft 41 rotates accordingly.

The driving sprocket 42 is attached to the right end part of the outer circumferential surface of the inner member 55a. The crankshaft 41, the inner member 55a, and the driving sprocket 42 are all displaced coaxially

In the central portion of the crankshaft 41 in the axial direction, a substantially cylindrical rotatable member 56 is disposed coaxially with the crankshaft 41. The right end part of the rotatable member 56 is supported by the crankshaft 41 via a cylindrical slide bearing 71. The left end part of the rotatable member 56 is connected to the crankshaft 41 by, for example, a spline mechanism. Accordingly, the rotatable member 56 rotates integrally with the crankshaft 41.

A torque detecting part 57 is disposed coaxially with the rotatable member 56. The torque detecting part 57 includes, for example, a magnetostrictive torque sensor. When the torque detecting part 57 is a magnetostrictive torque sensor, the torque detecting part 57 has a coil disposed so as to face the outer circumferential surface of the rotatable member 56. The torque detecting part 57 having such a configuration detects a distortion of the rotatable member 56 as a change of coil voltage to determine the torque of the crankshaft 41. The torque detecting part 57 outputs a signal in accordance with the determined torque to a control device 110, which will be described below. The control device 110 controls the electric motor 61, which will be described below, based on the signal output from the torque detecting part 57. Note that the torque detecting part 57 may have a configuration different from that of a magnetostrictive torque sensor as long as it has a configuration that is capable of sensing a pedal effort.

A substantially cylindrical outer member 55b of the one-way clutch 55 is disposed coaxially with the crankshaft 41 such that the rotatable member 56 and the inner member 55a are connected to each other. The left end part of the outer member 55b and the right end part of the rotatable member 56 are connected to each other by, for example, a spline mechanism. Accordingly, the outer member 55b rotates integrally with the rotatable member 56.

The right end part of the outer member 55b and the left end part of the inner member 55a are connected to each other by, for example, a ratchet mechanism such that only the rotational force in one direction is transmitted from the outer member 55b to the inner member 55a. Accordingly, the rotational force in the forward rotational direction (clockwise direction when viewed from the right side) is transmitted from the outer member 55b to the inner member 55a. However, the rotational force in the backward rotational direction (counter-clockwise direction when viewed from the right side) is not transmitted from the outer member 55b to the inner member 55a.

Due to this configuration, when a rider rotates the crankshaft 41 by working the pedals 33, 34 so as to move the battery-assisted bicycle 1 forward, the pedal effort of the rider is transmitted from the crankshaft 41 to the inner member 55a via the rotatable member 56 and the outer member 55b. Accordingly, the inner member 55a and the driving sprocket 42 rotate forward. On the other hand, when the rider rotates the crankshaft 41 backward, this rotation is not transmitted from the outer member 55b to the inner member 55a. Accordingly, neither the inner member 55a nor the crankshaft 41 rotates backward.

The driving force generating part 60 is disposed in the first housing part 52 and the second housing part 53 more toward the rear than the crankshaft 41. The driving force generating part 60 has the electric motor 61, an output shaft 81, and a gear 82.

The electric motor 61 generates supplementary driving force to assist the travel of the battery-assisted bicycle 1 based on the control signal output from the control device 110, which will be described below. Also, the electric motor 61 is drive-controlled so as to change the supplementary driving force that assists the travel of the battery-assisted bicycle 1 in accordance with the assist mode, which will be described below.

The electric motor 61 has a stator 62, a rotor 63, and a rotational shaft 64. The stator 62 is fixed to the second housing part 53. A motor cover 65 is attached to the second housing part 53 so as to cover the left side of the electric motor 61. The rotational shaft 64 penetrates the rotor 63 and is fixed to the rotor 63. The rotational shaft 64 is rotatably supported by the second housing part 53 and the motor cover 65 via rolling bearings 66, 67. A gear groove 64a is formed in the right end part of the rotational shaft 64.

Note that, although not specifically shown in the figures, the control device 110, which will be described below, is disposed near the electric motor 61. In this embodiment, the control device 110 is disposed near the electric motor 61, but the present invention is not limited to this configuration, and the control device 110 may be disposed in another place.

The output shaft 81 is rotatably supported by the body part 51 in a place more toward the rear than the crankshaft 41. Specifically, the output shaft 81 is rotatably supported by the first housing part 52 and the second housing part 53 via the rolling bearings 83, 84.

The gear 82 is disposed coaxially with the output shaft 81 between the rolling bearing 83 and the rolling bearing 84. The gear 82 meshes with the gear groove 64a formed in the rotational shaft 64 of the electric motor 61. Accordingly, supplementary driving force generated by the electric motor 61 is transmitted from the rotational shaft 64 to the gear 82, and thus the gear 82 is rotated. In this embodiment, the electric motor 61 is disposed such that the rotational shaft 64 is rotated forward. Accordingly, the gear 82 is rotated backward by the supplementary driving force transmitted from the rotational shaft 64.

A one-way clutch 85 is provided between the gear 82 and the output shaft 81. The one-way clutch 85 is configured so as to transmit backward rotational force from the gear 82 to the output shaft 81 but not to transmit forward rotational force.

The auxiliary sprocket 43 is disposed coaxially with the output shaft 81 in the right end part of the output shaft 81. The auxiliary sprocket 43 and the output shaft 81 are connected to each other by, for example, a spline mechanism. Accordingly, supplementary driving force generated in the driving force generating part 60 is transmitted from the output shaft 81 to the auxiliary sprocket 43, thereby allowing the auxiliary sprocket 43 to rotate backward.

The chain tensioner 86 is disposed in the rear end part of the right side surface of the first housing part 52. As shown in FIG. 2, one end of the chain tensioner 86 is connected to the first housing part 52 via a tension spring 87. Also, the other end of the chain tensioner 86 is rotatably connected to the first housing part 52 by a support bolt 88. The chain tensioner 86 is provided with a tension sprocket 90 that is rotatable around the support bolt 89. The chain 46 is placed around the tension sprocket 90 so as to push the tension sprocket 90 rearward. Accordingly, the chain 46 is adjusted so as to have suitable tension by the chain tensioner 86.

### (Display device)

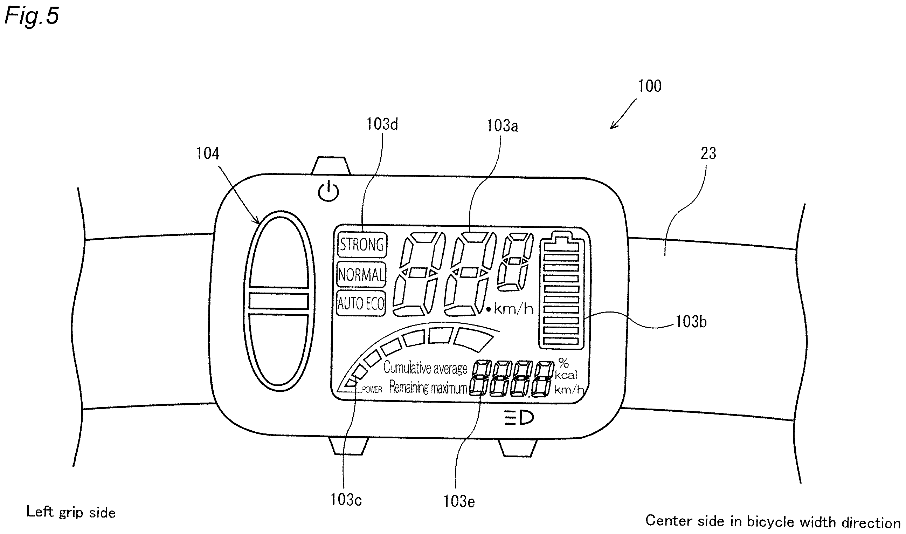

As shown in FIGS. 1 and 5, the battery-assisted bicycle 1 has a display device 100 attached to the handlebar 23. For example, the display device 100 is attached to the handlebar 23 near the left grip. The display device 100 shows information including the speed of the battery-assisted bicycle 1, the remaining level of the battery 36, the amount of electric current output from the battery 36, and other travel information. The display device 100 is connected to the control device 110, which will be described below, so as to be capable of transmitting and receiving a signal via wiring (not shown). Note that the display device 100 may be attached to the central part of the handlebar 23 in the bicycle width direction or near the right grip.

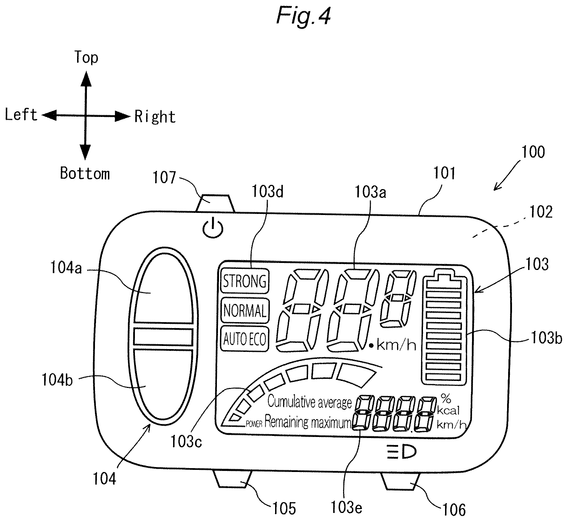

As shown in FIG. 4, the display device 100 has a casing 101 formed in a horizontally long, substantially rectangular shape and a display device control part 102 accommodated in the casing 101. The casing 101 is provided with a display 103, an assist mode operating part 104 (input part), a display mode selection button 105, a light operating part 106, and a power switch 107.

The display 103 includes, for example, a liquid crystal panel. The display 103 is controlled by the display device control part 102 so as to display characters, figures, and the like. The display 103 has a speed displaying part 103a, a remaining battery level displaying part 103b, an amount of electric current displaying part 103c, an assist mode displaying part 103d, and a selected information displaying part 103e. Information output as meter information signals from the control device 110, which will be described later, appears on the speed displaying part 103a, the remaining battery level displaying part 103b, the amount of electric current displaying part 103c, the assist mode displaying part 103d, and the selected information displaying part 103e. The remaining battery level displaying part 103b and the selected information displaying part 103e are provided so as to be adjacent to each other.

The speed of the battery-assisted bicycle 1 numerically appears on the speed displaying part 103a. The speed of the battery-assisted bicycle 1 is determined by, for example, a speed sensor (not shown). The speed displaying part 103a is provided above the central portion of the display 103.

The remaining level of the battery 36 appears in a segmented manner on the remaining battery level displaying part 103b based on information on the battery remaining level output from the battery control part 37 of the battery unit 35 to the control device 110. The remaining level of the battery 36 always appears on the remaining battery level displaying part 103b as long as electricity is supplied to the display device 100.

As shown in FIG. 5, the remaining battery level displaying part 103b is provided toward the center of the bicycle in the bicycle width direction (rider side, right side in the figure) on the display 103. The remaining battery level displaying part 103b is provided more toward the center of the bicycle in the bicycle width direction than the selected information displaying part 103e. Also, the remaining battery level displaying part 103b is provided above the selected information displaying part 103e. Accordingly, the remaining battery level displaying part 103b is disposed in a place where the remaining battery level displaying part 103b can be most easily found when a rider looks at the display 103. On the display 103, it is easiest for the rider to look at a place that is on the bicycle center side close to the rider and on the upper side where a change of the line of sight is small. Providing the remaining battery level displaying part 103b in that place makes it easy for a rider to look at the remaining battery level displaying part 103b.

The amount of output electric current of the battery 36 appears in a segmented manner on the amount of electric current displaying part 103c based on information on the amount of electric current output from the battery control part 37 of the battery unit 35 to the control device 110. The amount of electric current displaying part 103c is provided below the speed displaying part 103a on the display 103.

An assist mode that has been selected through an operation on the assist mode operating part 104, which will be described below, appears on the assist mode displaying part 103d. For example, in this embodiment, the assist mode includes four modes, i.e., "STRONG", "NORMAL", "AUTO ECO", and "OFF", as will be described below. When any one of the assist modes "STRONG", "Normal", and "AUTO ECO" is selected, an indicator corresponding to the selected mode is illuminated and appears on the assist mode displaying part 103d. On the other hand, when the assist mode is "OFF", no indicator is illuminated on the assist mode displaying part 103d. As will be described below, the assist mode corresponds to the proportion of assistance of the electric motor 61. Accordingly, the assist mode displaying part 103d shows information on the proportion of assistance of the electric motor 61. The assist mode displaying part 103d is provided on the left grip side of the display 103. The assist mode displaying part 103d is positioned near the assist mode operating part 104.

The selected information displaying part 103e numerically shows the average speed, maximum speed, accumulated travel distance, remaining assistable travel distance, spent calorie, and remaining battery level in accordance with an operation performed on the display mode selection button 105, which will be described later. The average speed, maximum speed, accumulated travel distance, remaining assistable travel distance, spent calorie, and remaining battery level appear on the selected information displaying part 103e based on information output from the control device 110. On the display 103, the selected information displaying part 103e is provided toward the center of the bicycle in the bicycle width direction, and is provided so as to be adjacent to the remaining battery level displaying part 103b. This makes it easy for a rider to look at the selected information displaying part 103e disposed toward the center of the bicycle, which is closer to the rider. Moreover, disposing the selected information displaying part 103e so as to be adjacent to the remaining battery level displaying part 103b makes it possible to show the assistable travel distance that is selectively displayed on the selected information display 103e and the remaining level of the battery 36 in adjacent places.

The assist mode operating part 104 is provided on the left side of the display 103 on the casing 101. This makes it possible for a rider of the battery-assisted bicycle 1 to easily operate the assist mode operating part 104 with, for example, the left thumb. Moreover, the display 103 is located in a position toward the center of the bicycle (on the rider side) in the bicycle width direction on the casing 101, thus making it easy for the rider to look at the display 103.

The assist mode operating part 104 has a first selection button 104a and a second selection button 104b. The first selection button 104a is provided above the second selection button 104b on the casing 101.

When a rider presses the first selection button 104a, an assist mode with which greater supplementary driving force is obtained can be selected. For example, if the current assist mode is "NORMAL", pressing the first selection button 104a changes the assist mode to "STRONG".

When a rider presses the second selection button 104b, an assist mode with which smaller supplementary deriving force is obtained can be selected. For example, if the current assist mode is "NORMAL", pressing the second selection button 104b changes the assist mode to "AUTO ECO". With the assist mode being "AUTO ECO", pressing the second selection button 104b once again turns off the assist mode, i.e., "OFF".

Hereinbelow, the assist mode will now be described briefly.

In this embodiment, the assist mode of the battery-assisted bicycle 1 includes four modes, i.e., "STRONG", "NORMAL", "AUTO ECO", and "OFF". The strengths of supplementary driving force from the electric motor 61 in order of largest to smallest, relative to the same amount of pedal effort, are "STRONG", "NORMAN", and "AUTO ECO".

In the "NORMAL" assist mode, the electric motor 61 generates supplementary driving force when the battery-assisted bicycle 1 starts moving or travels on a flat road or an ascending road. In the "STRONG" assist mode, the electric motor 61 generates supplementary driving force when the battery-assisted bicycle 1 starts moving or travels on a flat road or an ascending road as in the "NORMAL" assist mode. In the "STRONG" assist mode, the electric motor 61 generates supplementary driving force that is larger than that in the "NORMAL" assist mode relative to the same amount of pedal effort.

In the "AUTO ECO" assist mode, the electric motor 61 generates supplementary driving force that is smaller than that in the "NORMAL" assist mode relative to the same amount of pedal effort when the battery-assisted bicycle 1 starts moving or travels on an ascending slope. When the assist mode is "OFF", the electric motor 61 does not generate supplementary driving force.

Accordingly, depending on the foregoing assist mode, the proportion of the assistance of the electric motor 61 to the pedal effort of a rider is different. The proportion of assistance refers to the ratio of the supplementary driving force from the electric motor 61 to the pedal effort of a rider.

In this embodiment, the assist mode can be switched between four modes. However, the assist mode may be switched between three or fewer modes or five or more modes.

The display mode selection button 105 is provided on the lower left side of the casing 101. Pressing the display mode selection button 105 changes the information appearing on the selected information displaying part 103e.

The light operating part 106 is provided on the lower right side of the casing 101. That is, the light operating part 106 is provided on the lower side of the casing 101 side by side with the display mode selection button 105. Pressing the light operating part 106 causes the display device control part 102 of the display device 100 to output a LIGHT-ON signal or a LIGHT-OFF signal to the control device 110. This makes it possible to turn on or turn off the light (not shown) provided on the battery-assisted bicycle 1.

The power switch 107 is provided on the upper left side of the casing 101. Pressing the power switch 107 causes the display device control part 102 of the display device 100 to output an ON signal or an OFF signal to the control device 110. This makes it possible to turn on or turn off the entire system that executes the assist control of the battery-assisted bicycle 1.

As shown in FIG. 6, the display device control part 102 has a display control part 102a, an operation control part 102b, and a signal control part 102c. The display control part 102a executes display control to show a variety of information on the display 103 based on meter information signals input from the control device 110. That is, the display control part 102a causes the speed displaying part 103a, the remaining battery level displaying part 103b, the amount of electric current displaying part 103c, and the assist mode displaying part 103d, and the selected information displaying part 103e to show information such as characters and figures in accordance with meter information signals.

The operation control part 102b outputs signals to the display control part 102a and the control device 110 in accordance with an input operation performed on the display device 100. That is, when the assist mode operating part 104, the display mode selection button 105, or the power switch 107 is operated, the operation control part 102b outputs a signal to the display control part 102a to change what is shown on the display 103 while also outputting a signal to the control device 110. Also, when the light operating part 106 is operated, the operation control part 102b outputs a signal to the control device 110.

The signal control part 102c controls transmission and reception of signals between the display device 100 and the control device 110. The display device 100 and the control device 110 send and receive signals relating to, for example, travel information of the battery-assisted bicycle 1 and input operations performed on the display device 100. The signal control part 102c controls transmission and reception of signals on the display device 100 side.

The display device control part 102 makes it possible to show on the display 103 of the display device 100 a variety of information output from the control device 110. In addition, the display device control part 102 makes it possible to change what is shown on the display 103 in accordance with an input operation performed on the display device 100 and to output a signal to the control device 110.

### (Control device and battery control device)

The control device 110 is provided near the electric motor 61 although this is not specifically shown in the figures. The control device 110 executes the assist control of the battery-assisted bicycle 1 and causes the display device 100 to show a variety of information. As shown in FIG. 6, the control device 110 has a control part 111, an inverter 112, and a storage part 113.

The inverter 112 controls electricity supplied to the electric motor 61 from the battery 36 and thus controls the drive of the electric motor 61. The inverter 112 controls the drive of the electric motor 61 in accordance with a control signal output from the control part 111 as will be described below.

The storage part 113 is configured so as to be able to store data. The storage part 113 includes, for example, a nonvolatile memory. The storage part 113 stores a variety of information including data such as information acquired during traveling of the battery-assisted bicycle 1, configurational information acquired through an input operation performed on the display device 100, and electricity consumption in each assist mode (the rate of electricity consumption: travel distance per unit capacity (amount of electricity) of the battery 36. hereinafter simply referred to as an electricity consumption). Also, the storage part 113 is capable of transmitting and receiving signals to and from the control part 111. Accordingly, while the control part 111 can read a variety of information stored in the storage part 113, the control part 111 can store information input to the control part 111 in the storage part 113 as data.

Note that only an electricity consumption that corresponds to a specific proportion of assistance may be stored in the storage part 113. In this case, an assistable distance calculating part 111b, which will be described below, calculates the electricity consumption in the current proportion of assistance in view of the ratio (or difference) of the proportion of assistance in the currently selected assist mode to a specific proportion of assistance stored in the storage part 113.

Although the storage part 113 is independent of the control part 111 in this embodiment, the storage part 113 may be included within the control part 111.

The control part 111 transmits and receives signals to and from the battery control part 37 of the battery unit 35, and thereby controls the output current of the battery 36 and obtains information on the remaining level and the output current of the battery 36 (battery information). Also, the control part 111 transmits and receives signals to and from the display device control part 102 of the display device 100, and thereby causes the display device 100 to show a variety of information and obtains information input through an input operation performed on the display device 100.

The control part 111 has a motor control part 111a and an assistable distance calculating part 111b. The motor control part 111a, in accordance with a torque signal input from the torque detecting part 57, outputs a control signal to the inverter 112 so as to assist the pedal effort of a rider. In detail, the motor control part 111a calculates supplementary driving force required of the electric motor 61 based on the torque signal input from the torque detecting part 57 and the proportion of assistance corresponding to the assist mode. Then, the motor control part 111a adjusts the output of the electric motor 61 such that the output of the electric motor 61 satisfies the required supplementary driving force. That is, the motor control part 111a, in accordance with the pedal effort, causes the electric motor 61 to generate driving force required for assistance.

The motor control part 111a alters the supplementary driving force generated by the electric motor 61 in accordance with an operation to change the assist mode performed on the assist mode operating part 104 of the display device 100.

For example, in the "NORMAL" assist mode, the motor control part 111a causes the electric motor 61 to generate supplementary driving force when the torque detecting part 57 senses torque that corresponds to when the bicycle starts moving, when the bicycle travels on a flat road, or when the bicycle travels on an ascending road. In the "STRONG" assist mode, the motor control part 111a causes the electric motor 61 to generate larger supplementary driving force than in the "NORMAL" assist mode relative to the same torque (pedal effort). In the "AUTO ECO" assist mode, the motor control part 111a causes the electric motor 61 to generate supplementary driving force when the torque detecting part 57 senses torque that corresponds to when the bicycle starts moving or when the bicycle travels on an ascending road. In the "AUTO ECO" assist mode, the motor control part 111a causes the electric motor 61 to generate smaller supplementary driving force than in the "NORMAL" assist mode relative to the same torque (pedal effort). When the assist mode is "OFF", the motor control part 111a does not cause the electric motor 61 to drive.

The assistable distance calculating part 111b calculates the remaining assistable travel distance using data, which is output from the battery control part 37, of the proportion of remaining level and the capacity (for example, nominal capacity) of the battery 36. The proportion of remaining level refers to the proportion of the remaining battery level relative to the battery level attained when the battery is fully charged.

The assistable distance calculating part 111b has an electricity consumption selecting part 111c, an amount of remaining electricity calculating part 111d, and a distance calculating part 111e. The electricity consumption selecting part 111c reads electricity consumption data corresponding to the assist mode from the storage part 113. Note that, in the storage part 113, for example, constant values obtained by dividing travel distances in the respective assist modes attainable with the battery 36, when it is fully charged, by the nominal capacity of the battery 36 are stored in advance as electricity consumptions. The electricity consumption data stored in the storage part 113 may be any data as long as the data corresponds to the respective assist modes.

The amount of remaining electricity calculating part 111d calculates the amount of electricity remaining in the battery 36 using data on the proportion of remaining level and the battery capacity of the battery 36 obtained from the battery control part 37 of the battery unit 35. The amount of remaining electricity can be obtained by multiplying the capacity and the proportion of remaining level of the battery 36. In this embodiment, the amount of remaining electricity can be obtained by multiplying the nominal capacity and the proportion of remaining level of the battery 36.

The distance calculating part 111e calculates a remaining assistable travel distance by multiplying the electricity consumption selected by the electricity consumption selecting part 111c and the amount of remaining electricity calculated by the amount of remaining electricity calculating part 111d.

The battery control part 37 has a remaining level calculating part 37a that obtains the proportion of remaining level of the battery 36 and a battery monitoring part 37b that monitors, for example, the output current of the battery 36. The battery monitoring part 37b determines not only the amount of electric current flowing out of the battery 36 during discharging but also the amount of electric current flowing into the battery 36 during charging of the battery 36. The amount of electric current determined during discharging by the battery monitoring part 37b is output as a part of battery information from the battery control part 37 to the control part 111. The remaining level calculating part 37a accumulates the amount of electric current during charging and discharging of the battery 36 obtained by the battery monitoring part 37b, and calculates the proportion of the amount of electric current remaining in the battery 36 relative to the total amount of electric current of the battery 36. This proportion is the aforementioned proportion of remaining level. The calculated proportion of remaining level is output as a part of battery information from the battery control part 37 to the control part 111.

### (Method for calculating assistable travel distance)

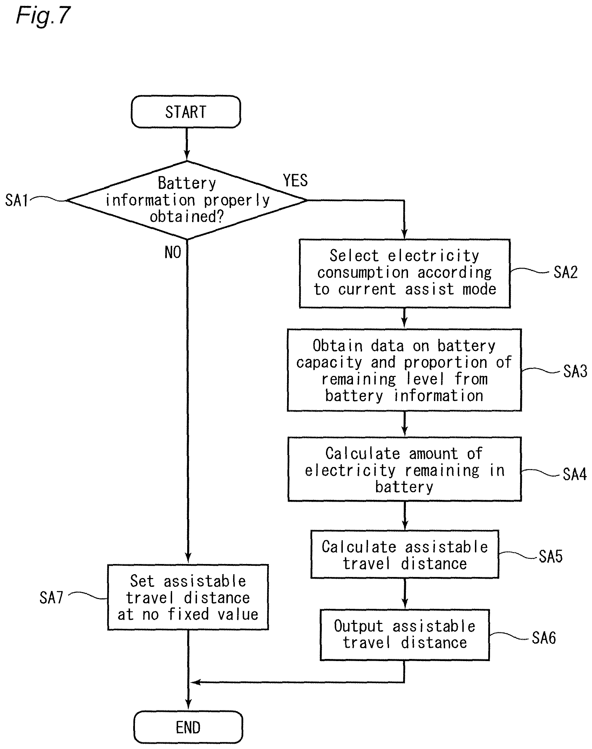

Hereinbelow, a method for calculating an assistable travel distance carried out by the assistable distance calculating part 111b of the control part 111 will now be described with reference to FIG. 7.

When the process shown in FIG. 7 is initiated, first, whether or not battery information that is output from the battery control part 37 is properly obtained by the control part 111 is judged (step SA1). If it is judged that battery information is properly obtained by the control part 111 (if YES), the process advances to step SA2. In step SA2 and subsequent steps, the assistable travel distance is calculated by the assistable distance calculating part 111b. On the other hand, if it is judged that battery information is not properly obtained by the control part 111 (if NO), the process advances to step SA7. In step SA7, the assistable distance calculating part 111b sets a signal that relates to the assistable travel distance at no fixed value. The control device 110 outputs the signal for the assistable travel distance set at no fixed value to the display device 100 as a part of a meter information signal.

In step SA2 above, the electricity consumption selecting part 111c of the assistable distance calculating part 111b reads an electricity consumption that corresponds to the current assist mode from the storage part 113.

Next, the assistable distance calculating part 111b obtains data on the proportion of remaining level and the battery capacity of the battery 36 based on the battery information output from the battery control part 37 (step SA3). Then, the amount of remaining electricity calculating part 111d calculates the amount of electricity remaining in the battery 36 from the proportion of remaining level and the battery capacity of the battery 36 (step SA4). In next step SA5, the distance calculating part 111e calculates the remaining assistable travel distance using the electricity consumption selected in step SA2 and the amount of remaining electricity calculated in step SA4. The calculated assistable travel distance is output as a signal by the control device 110 to the display device 100.

In steps SA6 and SA7, the control device 110 outputs a signal that relates to the assistable travel distance to the display device 100 as a part of the meter information signal, and then ends the process of FIG. 7 (END).

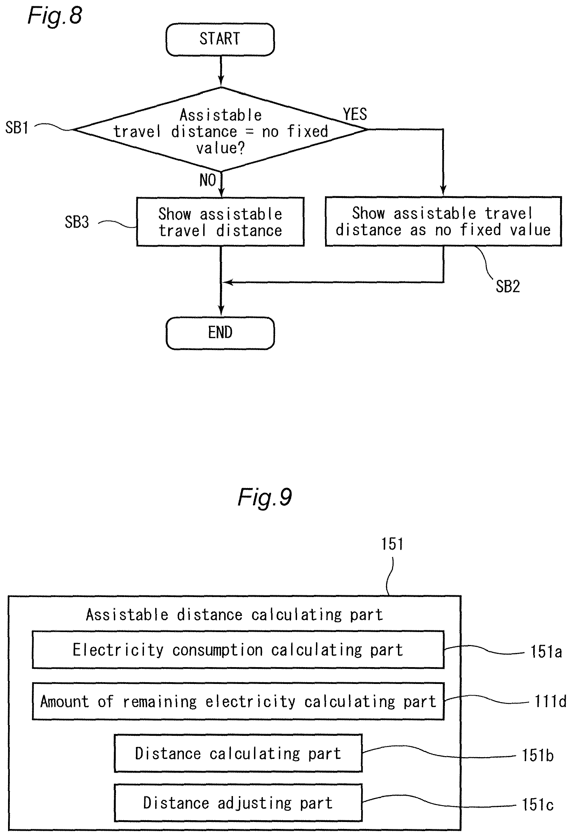

Next, regarding the display device 100 that has received the signal relating to the assistable travel distance, the operation of the display control part 102a when showing the assistable travel distance will now be described in reference to FIG. 8. Note that, in the description below, the assistable travel distance is selected as information to be displayed on the selected information display part 103e of the display device 100.

The process shown in FIG. 8 is initiated when the signal relating to the assistable travel distance is input from the control device 110 to the display device 100. First, in step SB1, the display device control part 102 judges whether or not the signal relating to the assistable travel distance output from the control device 110 is set at no fixed value. If the value of the assistable travel distance does not have a fixed value (if YES), the process advances to step SB2. In step SB2, the display control part 102a causes the selected information displaying part 103e to show the assistable travel distance as not having a fixed value (for example, only a horizontal line is shown). On the other hand, if the assistable travel distance has a fixed value (if NO), the process advanced to step SB3. In step SB3, the display control part 102a causes the selected information displaying part 103e to show the assistable travel distance.

After steps SB2 and SB3, this process ends (END).

In this embodiment, the assistable distance calculating part 111b calculates the remaining assistable travel distance using electricity consumptions that are determined in advance for the respective assist modes and the amount of electricity remaining in the battery 36. This makes it possible, when the assist mode is changed, to promptly show the assistable travel distance corresponding to the post-change assist mode on the display device 100. Moreover, this also makes it possible to readily obtain the remaining assistable travel distance based on the electricity consumption corresponding to the assist mode and the amount of electricity remaining in the battery 36.

In this embodiment, the assist mode changes between at least two stages in a step-wise manner, and therefore the remaining assistable travel distance greatly changes according to the assist mode change. As described above, promptly showing the remaining assistable travel distance after an assist mode change enables a rider to promptly make sure of an accurate assistable travel distance.

In this embodiment, the electricity consumptions determined in accordance with the proportions of assistance are stored in the storage part 113. This makes it possible for the assistable distance calculating part 111b, when calculating an assistable travel distance, to read suitable electricity consumption data from the storage part 113.

In this embodiment, the assist mode is changed through an input operation performed on the assist mode operating part 104 of the display device 100. This makes it possible to readily change the assist mode near the rider's hand.

In this embodiment, the display 103 and the assist mode operating part 104 are disposed so as to be adjacent to each other. This makes it possible to make sure of an assist mode change achieved through an input operation performed on the assist mode operating part 104 with the display 103 placed near the assist mode operating part 104.

In this embodiment, the assist mode is displayed in the assist mode displaying part 103d and the assistable travel distance is displayed in the selected information displaying part 103e on the display 103 of the display device 100. This makes it possible to show the assist mode and the assistable travel distance on the display 103. Accordingly, a rider can readily make sure of the assist mode and the assistable travel distance that changes in accordance with the assist mode.

### Embodiment 2

FIG. 9 shows a schematic configuration of an assistable distance calculating part 151 in a battery-assisted bicycle control device according to Embodiment 2. The configuration of Embodiment 2 is different from the configuration of the foregoing Embodiment 1 in that the assistable distance calculating part 151 obtains an assistable travel distance using an electricity consumption calculated after every specific travel distance. In the description below, components identical to those in Embodiment 1 are given the same reference numbers and the description thereof will be omitted, and only the different points will be described.

As shown in FIG. 9, the assistable distance calculating part 151 has an electricity consumption calculating part 151a, the amount of remaining electricity calculating part 111d, a distance calculating part 151b, and a distance adjusting part 151c.

The electricity consumption calculating part 151a calculates an electricity consumption used when the electric motor 61 assists a pedal effort every time a specific distance is traveled. That is, the electricity consumption calculating part 151a calculates an electricity consumption using the change of the remaining battery level brought about when the battery-assisted bicycle has traveled a specific distance. The travel distance of the battery-assisted bicycle is determined by, for example, a speed sensor (not shown). Information on the remaining battery level is obtained from battery information that is input to the control device 110 from the battery control part 37.

When the assist mode is changed, the electricity consumption calculating part 151a corrects the electricity consumption that has been calculated in the above-described manner in view of the ratio of the electricity consumption in the previous assist mode to the electricity consumption in the current assist mode. Here, the electricity consumption in the previous assist mode (hereinafter referred to as a "pre-change electricity consumption") and the electricity consumption in the current assist mode (hereinafter referred to as a "post-change electricity consumption") are values determined in advance and stored in the storage part 113. The electricity consumption calculating part 151a retrieves both the pre-change electricity consumption and the post-change electricity consumption from the storage part 113. Then, the electricity consumption calculating part 151a obtains the electricity consumption after an assist mode change by multiplying the proportion of the pre-change electricity consumption relative to the post-change electricity consumption by an electricity consumption calculated after every specific travel distance as described above. This makes it possible to obtain an electricity consumption corresponding to the post-change assist mode even immediately after an assist mode change.

The distance calculating part 151b calculates an assistable travel distance using the electricity consumption obtained by the electricity consumption calculating part 151a and the amount of remaining electricity obtained by the amount of remaining electricity calculating part 111d, which has the same configuration as in Embodiment 1.

The distance adjusting part 151c adjusts the assistable travel distance when the traveling pattern of the battery-assisted bicycle is changed. The distance adjusting part 151c, when the currently calculated assistable travel distance is greater than the previously calculated assistable travel distance, makes the assistable travel distance greater than the calculation result. For example, in the case where the distance calculating part 151b calculates an assistable travel distance every 250 m, if the currently calculated assistable travel distance is greater than the previously calculated assistable travel distance, 100 m is added to the result of calculation performed by the distance calculating part 151b. The distance adjusting part 151c, when the currently calculated assistable travel distance is smaller than the previously calculated assistable travel distance, makes the assistable travel distance smaller than the calculation result. For example, in the case where the distance calculating part 151b calculates an assistable travel distance every 250 m, if the currently calculated assistable travel distance is smaller than the previously calculated assistable travel distance, 100 m is subtracted from the result of calculation performed by the distance calculating part 151b. This makes it possible to bring the calculated assistable travel distance close to the actual assistable travel distance in accordance with the change of traveling pattern. Note that, when adjusting the assistable travel distance, the value added to or subtracted from the calculation result does not need to be 100 m.

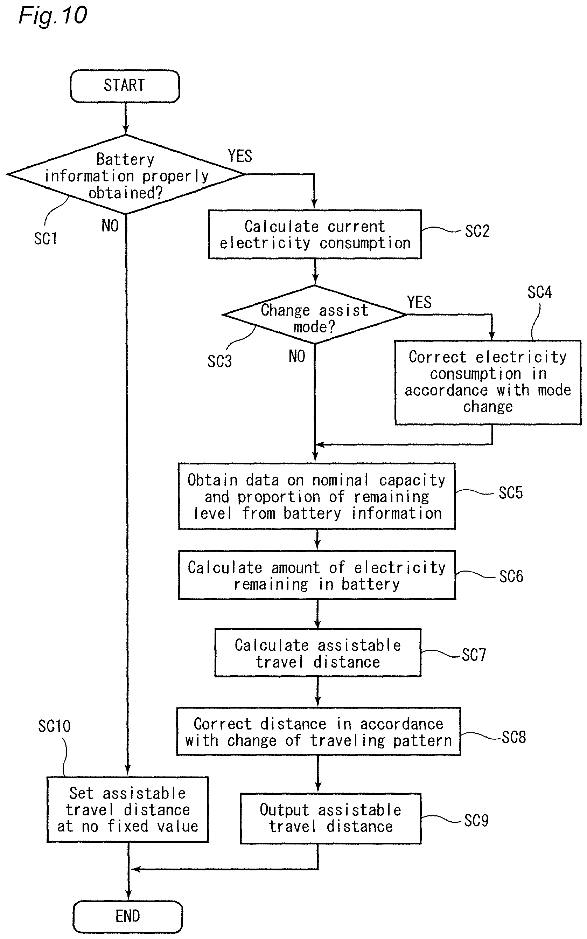

A method for calculating an assistable travel distance carried out by the assistable distance calculating part 151 will now be described in reference to FIG. 10.

When the process shown in FIG. 10 is initiated, first, whether or not battery information output from the battery control part 37 is properly obtained by the control part 111 is judged (step SC1). If it is judged that battery information is properly obtained by the control part 111 (if YES), the process advances to step SC2. In step SC2 and subsequent steps, the assistable travel distance is calculated by the assistable distance calculating part 151. On the other hand, if it is judged that battery information is not properly obtained by the control part 111 (if NO), the process advances to step SC10. In step SC10, the assistable distance calculating part 151 sets a signal that relates to the assistable travel distance at no fixed value. The control device (not shown) outputs the signal relating to the assistable travel distance set at no fixed value to the display device 100 as a part of a meter information signal.

In step SC2 above, the current electricity consumption of the battery-assisted bicycle is calculated by the electricity consumption calculating part 151a. As described above, the electricity consumption calculating part 151a calculates an electricity consumption based on the travel distance and the remaining level of the battery 36 after every specific distance.

Next, in step SC3, the control device judges whether the assist mode has been changed or not after the previous assistable travel distance calculation. If the control device judges that the assist mode has been changed (if YES), the process advances to step SC4. In step SC4, the electricity consumption calculating part 151a corrects the electricity consumption in accordance with the assist mode change. That is, in this step SC4, the electricity consumption calculating part 151a converts the electricity consumption calculated before the assist mode change into the post-assist mode change electricity consumption using the proportion of the pre-change electricity consumption to the post-change current electricity consumption stored in the storage part 113. Then, the process advances to step SC5.

Also, if the control device judges that the assist mode has not been changed (if NO), the process advances to step SC5. In step SC5, the assistable distance calculating part 151 obtains data on the proportion of remaining level and the battery capacity of the battery 36 from the battery information output from the battery control part 37. Then, the amount of remaining electricity calculating part 111d calculates the amount of electricity remaining in the battery 36 using the proportion of remaining level and the battery capacity of the battery 36 (step SC6). In next step SC7, the distance calculating part 151b calculates the remaining assistable travel distance using the electricity consumption calculated in step SC2 (corrected electricity consumption if corrected in step SC4) and the amount of remaining electricity calculated in step SC6.

Then, in step SC8, the distance adjusting part 151c corrects the assistable travel distance in accordance with the change of the traveling pattern of the battery-assisted bicycle.

The assistable travel distance calculated as described above is output by the control device as a part of the meter information signal to the display device 100.

In steps SC9 and SC10, the control device outputs a signal that relates to the assistable travel distance to the display device 100 as a part of the meter information signal, and then ends the process of FIG. 10 (END).

Note that, in the display device 100, the operation of the display control part 102a when showing the assistable travel distance is the same as in FIG. 8 for Embodiment 1 and the description thereof is thus omitted.

In this embodiment, the assistable distance calculating part 151, when the assist mode is changed, converts the pre-assist mode change electricity consumption into the post-assist mode change electricity consumption using the electricity consumptions for the respective assist modes stored in advance in the storage part 113. This makes it possible, even when the assist mode is changed, to promptly show the assistable travel distance corresponding to the post-change assist mode on the display device 100.

### (Other embodiments)

Although embodiments of the present invention have been described above, the above embodiments are merely illustrative examples for carrying out the present invention. Accordingly, the present invention is not intended to be limited to the above embodiments, and appropriate modifications can be made to the various types of embodiments described above.

In the foregoing embodiments, the assist mode is selected from four modes. That is, the proportion of assistance by the electric motor 61 is changed in a stepwise manner. However, the proportion of assistance by the electric motor 61 may be changed steplessly.

In the foregoing embodiments, the remaining level of the battery 36 is obtained by comparing the total amount of electric current when the battery 36 is fully charged with the amount of electric current when the battery is being discharged. However, any method may be used as a method for obtaining the remaining battery level, such as a method in which the remaining level is obtained by measuring the voltage of the battery or a method in which the remaining level is obtained by measuring the impedance of the battery.

In the foregoing embodiments, the amount of remaining electricity of the battery 36 is obtained from the proportion of remaining level and the nominal capacity of the battery 36. However, the amount of remaining electricity of the battery 36 may be obtained from the proportion of remaining level of the battery 36 and the actual capacity of the battery 36.

In the foregoing embodiments, the electric motor 61 is disposed in the central part of the battery-assisted bicycle 1. However, the electric motor may be disposed in the front-wheel or rear-wheel hub. In this case, the electric motor directly drives the front-wheel or rear-wheel axle.

In the foregoing embodiments, the display 103 is provided with the assist mode displaying part 103d and the selected information displaying part 103e. However, it is possible that while the display 103 is provided with the selected information displaying part 103e, another display disposed so as to be adjacent to the display 103 is provided with the assist mode displaying part 103d. In this case, the other display may indicate the assist mode (information on the proportion of assistance) by, for example, an LED light or the like.

In the foregoing embodiments, as shown in FIG. 4, the speed displaying part 103a, the remaining battery level displaying part 103b, the amount of electric current displaying part 103c, the assist mode displaying part 103d, and the selected information displaying part 103e are disposed on the display 103. However, the speed displaying part 103a, the remaining battery level displaying part 103b, the amount of electric current displaying part 103c, the assist mode displaying part 103d, and the selected information displaying part 103e may be disposed in an arrangement other than that shown in FIG. 4. Also, it is not necessary to provide the speed displaying part 103a or the amount of electric current displaying part 103c on the display 103. Moreover, the selected information displaying part 103e may show only the assistable travel distance.

In the foregoing Embodiment 1, the electricity consumptions used when calculating an assistable travel distance are fixed values corresponding to the respective assist modes. Also, in the foregoing Embodiment 2, the electricity consumptions used when calculating an assistable travel distance are values obtained in accordance with a specific travel distance of the battery-assisted bicycle. Electricity consumptions may be obtained according to another method as long as electricity consumptions corresponding to the respective assist modes are obtained.

## Claims

1. A battery-assisted bicycle (1) that assists a pedal effort of a rider with driving force from an electric motor (61), comprising:
a motor control part (111a) configured to control driving of the electric motor (61) in accordance with the pedal effort;
a battery (36) configured to supply electricity to the electric motor (61);
a battery control part (37) configured to determine a remaining level of the battery (36);
an assistable distance calculating part (111b, 151) configured to calculate a remaining assistable distance based on the remaining level of the battery (36) determined by the battery control part (37); and
a display (103) configured to indicate the assistable travel distance calculated by the assistable distance calculating part (111b, 151),
the motor control part (111a) being configured so as to be capable of changing a proportion of assistance of the electric motor (61) to the pedal effort, wherein an assist mode corresponds to the proportion of assistance of the electric motor and the assist mode is selectable through an operation of an assist mode operation part (104),
the assistable distance calculating part (111b, 151) being configured to calculate the assistable travel distance in accordance with the change of the proportion of assistance in the motor control part (111a);
**characterized in that**
the assistable distance calculating part (111b, 151) is configured to calculate the assistable travel distance by using the amount of remaining electricity that is obtained by multiplying the nominal capacity and the proportion of remaining level of the battery (36), wherein the proportion of remaining level refers to the proportion of the remaining battery level relative to the battery level attained when the battery is fully charged, and an electricity consumption rate that is a travel distance per unit amount of electricity of the battery (36) and is determined in accordance with the proportion of assistance, and the electricity consumption rate is a constant value obtained by dividing a travel distance in the respective assist mode attainable with the battery, when it is fully charged, by nominal capacity of the battery.

2. The battery-assisted bicycle (1) according to claim 1, wherein
the motor control part (111a) is configured so as to be capable of changing the proportion of assistance between at least two stages.

3. The battery-assisted bicycle (1) according to claim 1 or 2, further comprising:
a storage part (113) configured to store the electricity consumption rate determined in accordance with the proportion of assistance.

4. The battery-assisted bicycle (1) according to any one of claims 1 to 3, wherein
the assistable distance calculating part (111b, 151) is configured to calculate the electricity consumption rate in accordance with the change of the proportion of assistance in the motor control part (111a) using an electricity consumption rate determined in accordance with a predetermined proportion of assistance.

5. The battery-assisted bicycle (1) according to any one of claims 1 to 4, wherein when the proportion of assistance is changed, the assistable distance calculating part (111b, 151) is configured to convert an electricity consumption rate applied before changing the proportion of assistance into an electricity consumption rate applied after changing the proportion of assistance, and is configured to calculate the assistable travel distance using the converted electricity consumption rate.

6. The battery-assisted bicycle (1) according to any one of claims 1 to 5, further comprising an input part configured to input the change of the proportion of assistance, wherein the motor control part (111a) is configured to change the proportion of assistance in accordance with an input of the change of the proportion of assistance in the input part 104.

7. The battery-assisted bicycle (1) according to claim 6, wherein
the input part 104 is disposed so as to be adjacent to the display (103).

8. The battery-assisted bicycle (1) according to claim 6 or 7, further comprising a display device (100) including the input part 104 and the display (103).

9. The battery-assisted bicycle (1) according to any one of claims 1 to 8, wherein
the display (103) indicates information on the proportion of assistance and the assistable travel distance.

10. The battery-assisted bicycle (1) according to any one of claims 1 to 9, wherein information on the proportion of assistance is indicated on another display that is adjacent to the display (103) that indicates the assistable travel distance.

11. A method for displaying an assistable travel distance of a battery-assisted bicycle (1) that assists a pedal effort of a rider with driving force from an electric motor (61), which is supplied with electricity from a battery (36) and whose driving is controlled by a motor control part (111a) in accordance with the pedal effort, the method comprising the steps of:
determining a remaining level of the battery (36);
calculating a remaining assistable distance based on the remaining level of the battery (36);
calculating the assistable travel distance in accordance with a change of a proportion of assistance of the electric motor (61) to the pedal effort; wherein an assist mode corresponds to the proportion of assistance of the electric motor and the assist mode is selectable through an operation of an assist mode operation part (104), and
displaying the calculated assistable travel distance;
**characterized in that**
the step of calculating the assistable travel distance by using the amount of remaining electricity that is obtained by multiplying the nominal capacity and the proportion of remaining level of the battery (36), wherein the proportion of remaining level refers to the proportion of the remaining battery level relative to the battery level attained when the battery is fully charged, further includes the step of calculating the assistable travel distance based on an electricity consumption rate that is a travel distance per unit amount of electricity of the battery (36) and is determined in accordance with the proportion of assistance, and
the electricity consumption rate is a constant value obtained by dividing a travel distance in the respective assist mode attainable with the battery, when it is fully charged, by nominal capacity of the battery.

12. The method for displaying the assistable travel distance of a battery-assisted bicycle (1) according to claim 11, wherein
the step of calculating the assistable travel distance in accordance with a change of a proportion of assistance of the electric motor (61) to the pedal effort further includes the step of converting an electricity consumption rate applied before changing the proportion of assistance into an electricity consumption rate applied after changing the proportion of assistance, and calculating the assistable travel distance using the converted electricity consumption rate.

## Patentansprüche

1. Fahrrad (1) mit Batterieunterstützung, das eine Pedalkraft eines Fahrers mit Antriebskraft von einem Elektromotor (61) unterstützt, wobei es umfasst:
einen Motor-Steuerungsteil (111a), der so konfiguriert ist, dass er Antrieb des Elektromotors (61) entsprechend der Pedalkraft steuert;
eine Batterie (36), die so konfiguriert ist, dass sie dem Elektromotor (61) Strom zuführt;
einen Batterie-Steuerungsteil (37), der so konfiguriert ist, dass er einen verbleibenden Ladestand der Batterie (36) bestimmt;
einen Teil (111b, 151) zum Berechnen einer Unterstützungs-Strecke, der so konfiguriert ist, dass er eine verbleibende Unterstützungs-Strecke auf Basis des durch den Batterie-Steuerungsteil (37) bestimmten verbleibenden Ladestandes der Batterie (36) berechnet; und
eine Anzeige (103), die so konfiguriert ist, dass sie die durch den Teil (111b, 151) zum Berechnen einer Unterstützungs-Strecke berechnete Unterstützungs-Fahrstrecke anzeigt,
wobei der Motor-Steuerungsteil (111a) so konfiguriert ist, dass er einen Anteil an Unterstützung der Pedalkraft durch den Elektromotor (61) ändern kann, wobei ein Unterstützungs-Modus dem Anteil an Unterstützung durch den Elektromotor entspricht und der Unterstützungs-Modus mittels einer Betätigung eines Unterstützungs-Modus-Betätigungsteils (104) ausgewählt werden kann,
der Teil (111b, 151) zum Berechnen einer Unterstützungs-Strecke so konfiguriert ist, dass er die Unterstützungs-Fahrstrecke entsprechend der Änderung des Anteils an Unterstützung in dem Motor-Steuerungsteil (111a) berechnet;
**dadurch gekennzeichnet, dass**
der Teil (111b, 151) zum Berechnen einer Unterstützungs-Strecke so konfiguriert ist, dass er die Unterstützungs-Fahrstrecke unter Verwendung der Menge an verbleibendem Strom, die ermittelt wird, indem die Nennkapazität und der Anteil des verbleibenden Ladestandes der Batterie (36) multipliziert werden, wobei der Anteil des verbleibenden Ladestandes den Anteil des verbleibenden Batterie-Ladestandes relativ zu dem Batterie-Ladestand angibt, der erreicht wird, wenn die Batterie vollständig geladen ist, sowie einer Stromverbrauchs-Rate berechnet, die eine Fahrstrecke pro Strommengen-Einheit der Batterie (36) ist und entsprechend dem Anteil an Unterstützung bestimmt wird, und die Stromverbrauchs-Rate ein konstanter Wert ist, der ermittelt wird, indem eine mit der Batterie in vollständig geladenem Zustand in dem jeweiligen Unterstützungs-Modus erreichbare Fahrstrecke durch die Nennkapazität der Batterie dividiert wird.

2. Fahrrad (1) mit Batterieunterstützung nach Anspruch 1, wobei
der Motor-Steuerungsteil (111a) so konfiguriert ist, dass er den Anteil an Unterstützung zwischen wenigstens zwei Stufen ändern kann.

3. Fahrrad (1) mit Batterieunterstützung nach Anspruch 1 oder 2, das des Weiteren umfasst:
einen Speicher-Teil (113), der so konfiguriert ist, dass er die entsprechend dem Anteil an Unterstützung bestimmte Stromverbrauchs-Rate speichert.

4. Fahrrad (1) mit Batterieunterstützung nach einem der Ansprüche 1 bis 3, wobei
der Teil (111b, 151) zum Berechnen einer Unterstützungs-Strecke so konfiguriert ist, dass er die Stromverbrauchs-Rate entsprechend der Änderung des Anteils an Unterstützung in dem Motor-Steuerungsteil (111a) unter Verwendung einer entsprechend einem vorgegebenen Anteil an Unterstützung bestimmten Stromverbrauchs-Rate berechnet.

5. Fahrrad (1) mit Batterieunterstützung nach einem der Ansprüche 1 bis 4, wobei
der Teil (111b, 151) zum Berechnen einer Unterstützungs-Strecke so konfiguriert ist, dass er, wenn der Anteil an Unterstützung geändert wird, eine vor Änderung des Anteils an Unterstützung wirkende Stromverbrauchs-Rate in eine nach Änderung des Anteils an Unterstützung wirkende Stromverbrauchs-Rate umwandelt, und so konfiguriert ist, dass er die Unterstützungs-Fahrstrecke unter Verwendung der umgewandelten Stromverbrauchs-Rate berechnet.

6. Fahrrad (1) mit Batterieunterstützung nach einem der Ansprüche 1 bis 5, das des Weiteren einen Eingabe-Teil umfasst, der zum Eingeben der Änderung des Anteils an Unterstützung konfiguriert ist, wobei der Motor-Steuerungsteil (111a) so konfiguriert ist, dass er den Anteil an Unterstützung entsprechend einer Eingabe der Änderung des Anteils an Unterstützung an dem Eingabeteil (104) ändert.

7. Fahrrad (1) mit Batterieunterstützung nach Anspruch 6, wobei
der Eingabe-Teil (104) so angeordnet ist, dass er an die Anzeige (103) angrenzt.

8. Fahrrad (1) mit Batterieunterstützung nach Anspruch 6 oder 7, das des Weiteren eine Anzeigeeinrichtung (100) umfasst, die den Eingabe-Teil (104) und die Anzeige (103) einschließt.

9. Fahrrad (1) mit Batterieunterstützung nach einem der Ansprüche 1 bis 8, wobei
die Anzeige (103) Informationen über den Anteil an Unterstützung und die Unterstützungs-Fahrstrecke anzeigt.

10. Fahrrad (1) mit Batterieunterstützung nach einem der Ansprüche 1 bis 9, wobei
Informationen über den Anteil an Unterstützung auf einer anderen Anzeige angezeigt werden, die an die Anzeige (103) angrenzt, die die Unterstützungs-Fahrstrecke anzeigt.

11. Verfahren zum Anzeigen einer Unterstützungs-Fahrstrecke eines Fahrrades (1) mit Batterieunterstützung, das eine Pedalkraft eines Fahrers mit Antriebskraft von einem Elektromotor (61) unterstützt, dem Strom von einer Batterie (36) zugeführt wird und dessen Antrieb durch einen Motor-Steuerungsteil (111a) entsprechend der Pedalkraft gesteuert wird, wobei das Verfahren die folgenden Schritte umfasst:
Bestimmen eines verbleibenden Ladestandes der Batterie (36);
Berechnen einer verbleibenden Unterstützungs-Strecke auf Basis des verbleibenden Ladestandes der Batterie (36);
Berechnen der Unterstützungs-Fahrstrecke entsprechend einer Änderung eines Anteils an Unterstützung der Pedalkraft durch den Elektromotor (61);
wobei ein Unterstützungs-Modus dem Anteil an Unterstützung durch den Elektromotor entspricht und der Unterstützungs-Modus mittels einer Betätigung eines Unterstützungs-Modus-Betätigungsteils (104) ausgewählt werden kann, und
Anzeigen der berechneten Unterstützungs-Fahrstrecke;
**dadurch gekennzeichnet, dass**
der Schritt des Berechnens der Unterstützungs-Fahrstrecke unter Verwendung der Menge an verbleibendem Strom, die ermittelt wird, indem die Nennkapazität und der Anteil des verbleibenden Ladestandes der Batterie (36) multipliziert werden, wobei der Anteil des verbleibenden Ladestandes den Anteil des verbleibenden Batterie-Ladestandes relativ zu dem Batterie-Ladestand angibt, der erreicht wird, wenn die Batterie vollständig geladen ist, des Weiteren den Schritt des Berechnens der Unterstützungs-Fahrstrecke auf Basis einer Stromverbrauchs-Rate einschließt, die eine Fahrstrecke pro Strommengen-Einheit der Batterie (36) ist und entsprechend dem Anteil an Unterstützung bestimmt wird, und
die Stromverbrauchs-Rate ein konstanter Wert ist, der ermittelt wird, indem eine mit der Batterie in vollständig geladenem Zustand in dem jeweiligen Unterstützungs-Modus erreichbare Fahrstrecke durch die Nennkapazität der Batterie dividiert wird.

12. Verfahren zum Anzeigen der Unterstützungs-Fahrstrecke eines Fahrrades (1) mit Batterieunterstützung nach Anspruch 11, wobei
der Schritt des Berechnens der Unterstützungs-Fahrstrecke entsprechend einer Änderung eines Anteils an Unterstützung der Pedalkraft durch den Elektromotor (61) des Weiteren den Schritt des Umwandelns einer vor Änderung des Anteils an Unterstützung wirkenden Stromverbrauchs-Rate in eine nach Änderung des Anteils an Unterstützung wirkende Stromverbrauchs-Rate sowie des Berechnens der Unterstützungs-Fahrstrecke unter Verwendung der umgewandelten Stromverbrauchs-Rate einschließt.

## Revendications

1. Bicyclette assistée par batterie (1) procurant une aide à l'effort sur une pédale d'un cycliste grâce à une force d'entraînement provenant d'un moteur électrique (61), comprenant :
un organe de commande de moteur (111a) configuré pour commander l'attaque du moteur électrique (61) en fonction de l'effort sur la pédale,
une batterie (36) configurée pour fournir de l'électricité au moteur électrique (61),
un organe de contrôle de batterie (37) configuré pour déterminer le niveau restant de la batterie (36),
un organe de calcul de distance d'assistance (111b, 151) configuré pour calculer la distance d'assistance restante sur la base du niveau restant de la batterie (36) déterminé par l'organe de contrôle de batterie (37), et
un afficheur (103) configuré pour indiquer la distance de trajet d'assistance calculée par l'organe de calcul de distance d'assistance (111b, 151),
l'organe de commande de moteur (111a) étant configuré de sorte à pouvoir modifier le taux d'assistance du moteur électrique (61) sur l'effort sur la pédale, un mode d'assistance correspondant au taux d'assistance du moteur électrique et le mode d'assistance pouvant être sélectionné grâce au fonctionnement d'un organe d'opération de mode d'assistance (104),
l'organe de calcul de distance d'assistance (111b, 151) étant configuré pour calculer la distance de trajet d'assistance en fonction de la modification du taux d'assistance dans l'organe de commande de moteur (111a),
**caractérisée en ce que**
l'organe de calcul de distance d'assistance (111b, 151) est configuré pour calculer la distance de trajet d'assistance en utilisant la quantité d'électricité restante obtenue en multipliant la capacité nominale et la proportion de niveau restant de la batterie (36), la proportion de niveau restant faisant référence à la proportion de niveau restant de batterie par rapport au niveau de batterie atteint lorsque la batterie est complètement chargée, et le débit de consommation d'électricité qui représente une distance de trajet par quantité unitaire d'électricité de la batterie (36), et elle est déterminée en fonction du taux d'assistance, et le débit de consommation d'électricité est une valeur constante obtenue en divisant par la capacité nominale de la batterie la distance de trajet dans le mode d'assistance respective pouvant être atteinte avec la batterie lorsqu'elle est complètement chargée.

2. Bicyclette assistée par batterie (1) selon la revendication 1, dans laquelle
l'organe de commande de moteur (111a) est configuré de sorte à pouvoir modifier le taux d'assistance entre au moins deux phases.

3. Bicyclette assistée par batterie (1) selon la revendication 1 ou la revendication 2, comprenant en outre :
un organe de stockage (113) configuré pour stocker le débit de consommation d'électricité déterminé en fonction du taux d'assistance.

4. Bicyclette assistée par batterie (1) selon l'une quelconque des revendications 1 à 3, dans laquelle l'organe de calcul de distance d'assistance (111b, 151) est configuré pour calculer le débit de consommation d'électricité en fonction de la modification du taux d'assistance dans l'organe de commande de moteur (111a) en utilisant un débit de consommation d'électricité déterminé en fonction d'une proportion prédéterminée d'assistance.

5. Bicyclette assistée par batterie (1) selon l'une quelconque des revendications 1 à 4, dans laquelle lorsque le taux d'assistance est modifié, l'organe de calcul de distance d'assistance (111b, 151) est configuré pour convertir un débit de consommation d'électricité appliqué avant la modification du taux d'assistance en un débit de consommation d'électricité appliqué après la modification du taux d'assistance, et il est configuré pour calculer la distance de trajet d'assistance en utilisant le débit converti de consommation d'électricité.

6. Bicyclette assistée par batterie (1) selon l'une quelconque des revendications 1 à 5, comprenant en outre un organe d'entrée configuré pour entrer la modification de taux d'assistance, dans laquelle l'organe de commande de moteur (111a) est configuré pour modifier le taux d'assistance en fonction d'une entrée de modification dans le taux d'assistance dans l'organe d'entrée 104.

7. Bicyclette assistée par batterie (1) selon la revendication 6, dans laquelle l'organe d'entrée 104 est placé de sorte à être adjacent à l'afficheur (103).

8. Bicyclette assistée par batterie (1) selon la revendication 6 ou la revendication 7, comprenant en outre un dispositif d'affichage (100) incluant l'organe d'entrée 104 et l'afficheur (103).

9. Bicyclette assistée par batterie (1) selon l'une quelconque des revendications 1 à 8, dans laquelle l'afficheur (103) indique les informations concernant le taux d'assistance et la distance de trajet d'assistance.

10. Bicyclette assistée par batterie (1) selon l'une quelconque des revendications 1 à 9, dans laquelle les informations concernant le taux d'assistance sont indiquées sur un autre afficheur qui est adjacent à l'afficheur (103) indiquant la distance de trajet d'assistance.

11. Procédé d'affichage d'une distance de trajet d'assistance pour une bicyclette assistée par batterie (1) procurant une aide à l'effort sur une pédale d'un cycliste grâce à une force d'entraînement provenant d'un moteur électrique (61), lequel est alimenté en électricité à partir d'une batterie (36) et dont l'attaque est commandée par un organe de commande de moteur (111a) en fonction de l'effort sur la pédale, le procédé comprenant les étapes suivantes :
la détermination du niveau restant de la batterie (36),
le calcul d'une distance d'assistance restante fondée sur le niveau restant de la batterie (36),
le calcul de la distance de trajet d'assistance en fonction d'une modification de taux d'assistance du moteur électrique (61) sur l'effort sur la pédale, un mode d'assistance correspondant au taux d'assistance du moteur électrique et le mode d'assistance pouvant être sélectionné grâce au fonctionnement d'un organe d'opération de mode d'assistance (104), et
l'affichage de la distance de trajet d'assistance calculée,
**caractérisé en ce que**
l'étape de calcul de la distance de trajet d'assistance en utilisant la quantité d'électricité restante qui est obtenue en multipliant la capacité nominale et la proportion de niveau restant de la batterie (36), la proportion de niveau restant faisant référence à la proportion du niveau de batterie restant par rapport au niveau de batterie atteint lorsque la batterie est complètement chargée, inclut en outre l'étape de calcul de la distance de trajet d'assistance fondée sur un débit de consommation d'électricité qui est une distance de trajet par quantité unitaire d'électricité de la batterie (36) et qui est déterminé en fonction du taux d'assistance, et
le débit de consommation d'électricité est une valeur constante obtenue en divisant par la capacité nominale de la batterie une distance de trajet dans le mode d'assistance respectif pouvant être atteinte avec la batterie lorsqu'elle est complètement chargée.

12. Procédé d'affichage de la distance de trajet d'assistance d'une bicyclette assistée par batterie (1) selon la revendication 11, dans lequel
l'étape de calcul de la distance de trajet d'assistance en fonction d'une modification de taux d'assistance du moteur électrique (61) sur l'effort sur la pédale inclut en outre l'étape de conversion d'un débit de consommation d'électricité appliqué avant de changer le taux d'assistance en un débit de consommation d'électricité appliqué après avoir changé le taux d'assistance, ainsi que le calcul de la distance de trajet d'assistance en utilisant le débit de consommation d'électricité converti.
